# EUROPÄISCHE PATENTSCHRIFT

(11) **EP 1 041 299 B1**
(45) Veröffentlichungstag und Bekanntmachung des Hinweises auf die Patenterteilung: **22.10.2003**
(21) Anmeldenummer: 00106870.9
(22) Anmeldetag: 30.03.2000
(51) Int. Cl.: F16B 12/24, F16B 19/10, F16B 13/04

(54) **Montageelement für den Möbelbau**
Mounting element for use in furniture manufacture
Elément de montage utilisé dans la fabrication de meubles

(30) Priorität: 01.04.1999 DE 19915119
(43) Veröffentlichungstag der Anmeldung: 04.10.2000
(73) Patentinhaber: Karl Simon GmbH & Co. KG, 78733 Aichhalden (DE)
(72) Erfinder: Bantle, Ulrich, 72186 Empfingen (DE)
(74) Vertreter: Fleck, Hermann-Josef, Dr.-Ing.

(56) Entgegenhaltungen:
- EP-A- 0 294 926
- US-A- 3 385 157
- US-A- 3 739 684
- US-A- 4 405 272

## Beschreibung

Die Erfindung betrifft ein Montageelement gemäß dem Oberbegriff der Ansprüche 1 und 2 für den Möbelbau, das in eine Bohrung eines Möbelteils einsetzbar und darin festlegbar ist, vgl. US-A-3 739 684.

Gerade im Möbelbau werden die verschiedenartigsten Montageelemente zum Verbinden von Möbelteilen oder zum Anbringen von verschiedenartigen Möbelbeschlagteilen an einem Möbelteil benötigt. Dabei ist die Bohrung im Möbelteil oft als Sacklochbohrung ausgebildet und das Montageelement ist zweiteilig, wobei ein Teil in die Bohrung des Möbelteils eingesetzt und darin festgelegt ist. Das in das Möbelteil eingesetzte Teil ist dabei in der Regel topfartig und hält allein durch Paß- oder Preßsitz in der Bohrung des Möbelteils, was oft jedoch nicht ausreicht.

Es ist Aufgabe der Erfindung, ein Montageelement für den Möbelbau zu schaffen, das einfach im Aufbau und kostengünstig in der Herstellung ist und dennoch für die unterschiedlichsten Zwecke im Möbelbau verwendbar ist.

Diese Aufgabe wird nach der Erfindung durch die Gegenstände der unabhängigen Ansprüche 1 und 2 gelöst.

In jedem Fall wird beim Einschlagen bzw. Eindrücken des Verbindungszapfens in die Befestigungshülse, die bereits in die Bohrung des Möbelteils eingesetzt ist, der Halt durch die Spreizung der Haltefedern der Befestigungshülse wesentlich verbessert. Der mit der Befestigungshülse verbundene Verbindungszapfen mit der Befestigungs- oder Gewindeaufnahme bietet eine einfache Lager- oder Schraubmöglichkeit zum Anbringen eines zweiten Möbelteils oder eines Möbelbeschlagteils. Dabei ist der Verbindungszapfen bereits in der vorbereiteten Einschlagstellung gehalten oder gebracht, um die Verbindung zwischen dem Verbindungszapfen und der Befestigungshülse schnell und leicht herstellen zu können. Die Befestigungshülse und der Verbindungszapfen können dabei als einstückiges Montageelement hergestellt werden oder bei getrennter Herstellung auf einfache Weise in die vorbereitete Einschlagstellung gebracht werden.

Nach einer Ausgestaltung der Befestigungshülse ist vorgesehen, dass die Haltefedern mittels einer stirnseitigen Scheibe miteinander verbunden sind. Dabei kann die Ausbildung so erfolgen, dass die Scheibe einen Schlitz aufweist, der vorzugsweise mit einem die Befestigungshülse in Haltefedern unterteilenden Schlitz zusammenfällt, damit sich die Befestigungshülse auch im Bereich der Scheibe auslenken und in der Bohrung des Möbelteils verspannen läßt.

Ist nach einer weiteren Ausgestaltung vorgesehen, dass die Außenflächen des Verbindungszapfens und die Innenfläche der Haltefedern als glatte Gleitflächen ausgebildet sind, dann wird der Einschlagvorgang des Verbindungszapfens in die Befestigungshülse erleichtert.

Der Sitz des Verbindungszapfens in der durch die Haltefedern der Befestigungshülse gebildeten Aufnahme wird dadurch verbessert, dass die Befestigungshülse an der der Scheibe abgekehrten Stirnseite mit den Haltefedern Rastansätze mit Rastflächen bilden, die in der Einschlagstellung in eine umlaufende Rastnut des Verbindungszapfens einrasten, da dadurch eine Rastverbindung geschaffen wird, die praktisch unlösbar ist.

Um einen Toleranzausgleich zu erreichen, sieht eine Weiterbildung vor, dass die Rastnut und/oder Rastansätze mehrere Raststufen aufweist.

Die Einführbewegung der Befestigungshülse in die Bohrung des Möbelteils wird durch Anschlag der Scheibe an dem Möbelteil begrenzt.

Der Zugang in die Befestigungs- oder Gewindebohrung des Verbindungszapfens für Befestigungsmittel wird dadurch erleichtert, dass die als Befestigungs- oder Gewindebohrung ausgebildete Befestigungs- oder Gewindeaufnahme mit einer sich kontinuierlich erweiterten Einführungsöffnung für den Verbindungszapfen versehen ist.

Das Befestigungsmittel kann dabei eine selbstschneidende oder normale auf die Gewindebohrung abgestimmte Befestigungsschraube sein.

Die Rastverbindung zwischen dem Verbindungszapfen und der Befestigungshülse läßt sich dadurch verbessern, dass die Raststufen des Verbindungszapfens und/oder die Rastflächen der Rastansätze der Haltefedern der Befestigungshülse mit rauher Oberfläche versehen sind.

Der Montageaufwand läßt sich dadurch in vielen Fällen reduzieren, dass der Verbindungszapfen und die Befestigungshülse oder der von der Befestigungshülse getrennte Verbindungszapfen einstückig an einem Möbelbeschlagteil angeformt sind.

Bilden Verbindungszapfen und Befestigungshülse ein einstückiges Montageelement, dann kann zusätzlich vorgesehen sein, dass die Anbindungen am Übergang zum Verbindungszapfen die Sollbruchstellen bilden und dass beim Einschlagen des Verbindungszapfens in die Aufnahme der Befestigungshülse die Anbindungen abbrechen und als Zentrierlappen für den Verbindungszapfen in die Aufnahme der Befestigungshülse einlenkbar sind.

Ist der Verbindungszapfen so ausgebildet, dass der Verbindungszapfen als Verbindungsbolzen mit zwei Rastnuten zum Verbinden mit zwei Befestigungshülsen ausgebildet ist, dann können auf einfache Weise zwei Möbelteile direkt miteinander verbunden werden.

Eine mögliche Erfindungsvariante sieht vor, dass der Verbindungszapfen der Aufnahme der Befestigungshülse in einer vorbereiteten Einschlagstellung gehalten ist.

Die Erfindung wird anhand von in den Zeichnungen dargestellten Ausführungsbeispielen näher erläutert. Es zeigen:
- Fig. 1: in vergrößertem Maßstab ein einstückiges Montageelement aus Verbindungszapfen und Befestigungshülse in einer vorbereiteten Einschlagstellung,
- Fig. 2: die Ansicht auf die Stirnseite der Befestigungshülse nach Fig. 1,
- Fig. 3: ein zweiteiliges Montageelement im Schnitt,
- Fig. 4: den Verbindungszapfen und die Befestigungshülse des Montageelementes in der vorbereiteten Einschlagstellung,
- Fig. 5: das Montageelement in der Montageendstellung, d.h. Einschlagstellung, und
- Fig. 6: eine Ansicht auf die Stirnseite der Befestigungshülse nach Fig. 3.

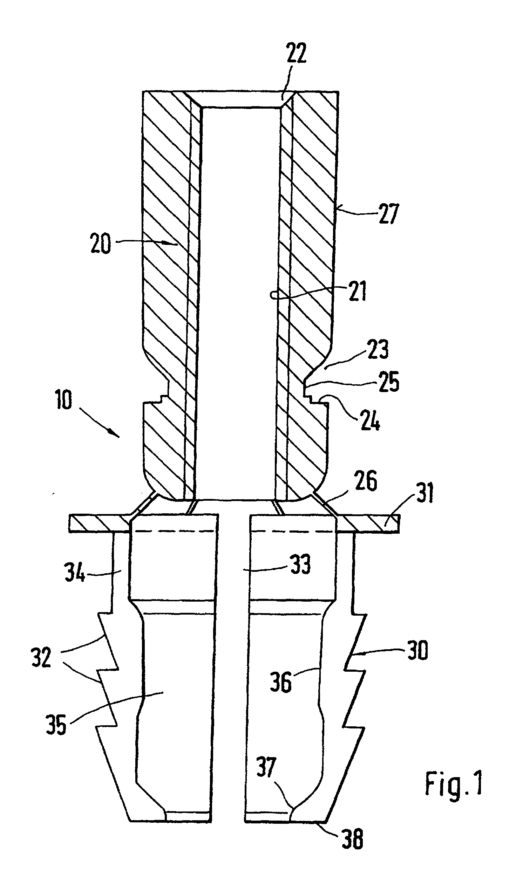

Wie Fig. 1 zeigt, ist der bolzenartige Verbindungszapfen 20 eines einstückigen Montageelementes 10 mit einer zentrischen Befestigungs- oder Gewindebohrung 21 versehen, die in einer sich konisch erweiternden Einführungsöffnung 22 stirnseitig ausläuft. Die Außenfläche 27 des Verbindungszapfens 20 ist als glatte konische Gleitfläche ausgebildet, die sich in Richtung zur Einführungsöffnung 22 hin verbreitert, damit dieser leicht in die Aufnahme der Befestigungshülse 30 eingeschlagen werden kann. Die Befestigungshülse 30 ist über Anbindungen 26 einstückig an dem Verbindungszapfen 20 angeformt. Im Übergangsbereich zu dem Verbindungszapfen 20 sind die Anbindungen 26 als Sollbruchstelle ausgebildet, damit beim Einschlagen der Verbindungszapfen 20 sich von den Anbindungen 26 löst und diese in die Aufnahme der Befestigungshülse 30 als Zentrierlappen eingelenkt werden. Die Zentrierlappen legen den Endbereich des Verbindungszapfens 20 spielfrei im Anfangsabschnitt der Aufnahme der Befestigungshülse 30 fest.

Die dem Verbindungszapfen 20 zugekehrte Stirnseite der Befestigungshülse 30 wird durch eine ringförmige Scheibe 31 gebildet, die die Einführbewegung der Befestigungshülse 30 in eine Bohrung im Möbelteil durch Anschlag an diesem begrenzt.

Die eingelenkten Zentrierlappen der Anbindungen 26 legen sich im Anfangsbereich an die Innenwandung der Befestigungshülse 30, die von Haltefedern 35 gebildet wird. Die Haltefedern 35 sind durch Schlitze 33 und 34 an der Befestigungshülse 30 abgeteilt, so dass sie ausgelenkt werden können, wenn der bolzenartige, entsprechend dimensionierte Verbindungszapfen 20 in die Befestigungshülse 30 eingeschlagen wird. Der Verbindungszapfen 20 gleitet dabei mit seinen Außenflächen 27 auf den glatten Innenflächen 36 der Haltefedern 35, bis die Rastansätze an den freien Enden der Haltefedern 35 in die umlaufende Rastnut 23 des Verbindungszapfens 20 einrasten. Die Innenflächen 36 können ebenfalls konisch ausgebildet sein und verbreitern sich in Richtung auf die Anbindungen 25. Die konischen Außenflächen 27 schaffen zusammen mit den konischen Innenflächen 36 eine Keilwirkung, die das Verspreitzen der Haltefedern 35 unterstützt. Die Rastnut 23 hat zwei Raststufen 24 und 25 und die Rastansätze der Haltefedern 35 hat eine Rastfläche 38, die wie die Raststufen 24 und 25 der Rastnut 23 eine rauhe Oberfläche aufweist, um die Verrastung zu verbessern.

Der Abstand der Rastnut 23 von der Stirnseite des Verbindungszapfens 20 mit der Einführungsöffnung 22 ist auf den Abstand der Rastansätze mit der Rastfläche 38 der Haltefedern 35 von der Scheibe 31 abgestimmt, so dass in der Einschlagstellung der Verbindungszapfen 20 etwa bündig mit der im Möbelteil festgelegten Befestigungshülse 30 abschließt. Die Haltefedern 35 werden dabei nach außen gelenkt und können mit ihren Verzahnungen 32 auf den Außenflächen der Haltefedern 35 in dem Möbelteil kraftschlüssig verhakt werden und einen sicheren Halt der Befestigungshülse 30 im Möbelteil gewährleisten. Die Einkerbungen im Bereich der Verzahnungen 32 wirken dabei als funktionelle Schwenklager für die Haltefeder-Teile.

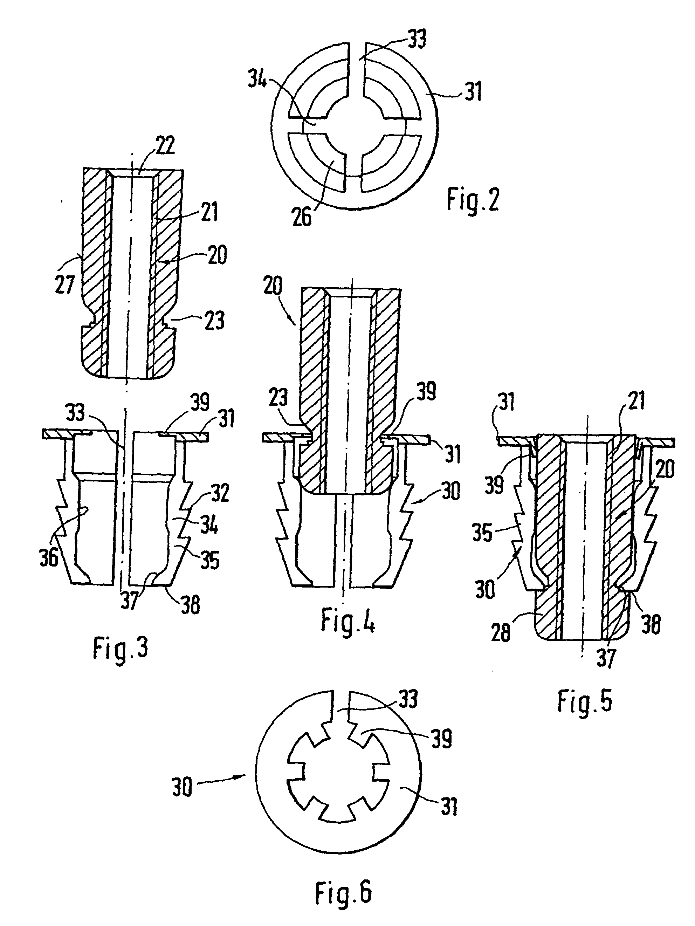

Der Schlitz 33 kann sich in die Scheibe 31 hinein erstrecken, so dass die Befestigungshülse 30 auch in diesem Bereich auseinander gedrückt und in der Bohrung des Möbelteils verspannt werden kann, wie die Draufsicht nach Fig. 2 erkennen läßt.

Der konstruktive Aufbau des Montageelementes 10 mit den getrennt hergestellten Teilen - Verbindungszapfen 20 und Befestigungshülse 30 - nach den Fig. 3 bis 6 entspricht dem des Montageelementes 10 nach Fig. 1 und 2.

Der Unterschied liegt lediglich darin, dass im Bereich der geschlitzten Scheibe 31 der Befestigungshülse 30 angeformte Lappen 39 in die Aufnahme ragen, die in die Rastnut 23 des Verbindungszapfens 20 einrasten, wenn der Verbindungszapfen 20 in die vorbereitete Einschlagstellung nach Fig. 4 gebracht wird. Die Endraststellung nach Fig. 5 unterscheidet sich nicht von der Einschlagstellung des Montageelementes 10 nach Fig. 1 und 2. Die Lappen 39 werden dabei in die Aufnahme der Befestigungshülse 30 eingelenkt und dienen dabei als Zentrierlappen. Anstatt der Zentrierlappen kann auch eine ringförmig umlaufender, lippenförmiger Bund verwendet sein. Alle Abwandlungen im Bereich auf die Befestigungs- oder Gewindebohrung 21 und Anformung des Verbindungszapfens 20 an einem Möbelbeschlagteil können in gleicher Weise auch auf das zweiteilige Montageelement 10 nach den Fig. 3 bis 6 übernommen werden.

## Patentansprüche

1. Montageelement für den Möbelbau, das in eine Bohrung eines Möbelteils einsetzbar und darin festlegbar ist, wobei das Montageelement
eine Befestigungshülse (30) und einen Verbindungszapfen (20) umfaßt, wobei die Befestigungshülse (30) auslenkbare Haltefedern (35) aufweist die eine Aufnahme für den Verbindungszapfen (20) umschließen, und in die Bohrung des Möbelteils einsteckbar ist, und wobei der Verbindungszapfen (20) eine Befestigungs- oder Gewindeaufnahme (21) aufweist,
**dadurch gekennzeichnet,**
**dass** die Haltefedern (35) auf ihren Außenseiten mit Verzahnungen (32) versehen sind, und
**dass** der Verbindungszapfen (20) über als Sollbruchstellen wirkende Anbindungen (26) einstückig mit der Befestigungshülse (30) verbunden und in vorbereiteter Einschlagstellung gehalten ist.

2. Montageelement für den Möbelbau, das in eine Bohrung eines Möbelteils einsetzbar und darin festlegbar ist, wobei das Montageelement
eine Befestigungshülse (30) und einen Verbindungszapfen (20) umfasst, wobei die Befestigungshülse (30) auslenkbare Haltefedern (35) aufweist die eine Aufnahme für den Verbindungszapfen (20) umschließen, und in die Bohrung des Möbelteils einsteckbar ist, und wobei der Verbindungszapfen (20) eine Befestigungs- oder Gewindeaufnahme (21) aufweist,
**dadurch gekennzeichnet,**
**dass** die Haltefedern (35) auf ihren Außenseiten mit Verzahnungen (32) versehen sind, und dass im Bereich der Einführseite in die Aufnahme der Befestigungshülse (30) ragende Lappen (39) angeformt sind, die beim Einschlagen des Verbindungszapfens (20) in die Befestigungshülse (30) in die Aufnahme hinein auslenkbar sind und als Zentrierlappen für den Verbindungszapfen (20) wirken.

3. Montageelement nach Anspruch 1 oder 2,
**dadurch gekennzeichnet,**
**dass** die Haltefedern (35) mittels einer stirnseitigen Scheibe (31) miteinander verbunden sind.

4. Montageelement nach Anspruch 3,
**dadurch gekennzeichnet,**
**dass** die Scheibe (31) einen Schlitz (33) aufweist, der vorzugsweise mit einem die Befestigungshülse (30) in Haltefedern (35) unterteilenden Schlitz (34) zusammenfällt.

5. Montageelement nach einem der Ansprüche 1 bis 4,
**dadurch gekennzeichnet,**
**dass** die Außenflächen (27) des Verbindungszapfens (20) und die Innenflächen (36) der Haltefedern (35) als glatte Gleitflächen ausgebildet sind.

6. Montageelement nach einem der Ansprüche 1 bis 5,
**dadurch gekennzeichnet,**
**dass** die Befestigungshülse (30) an der der Scheibe (31) abgekehrten Stirnseite mit den Haltefedern (35) Rastansätze mit Rastflächen (37,38) bilden, die in der Einschlagstellung in eine umlaufende Rastnut (23) des Verbindungszapfens (20) einrasten.

7. Montageelement nach Anspruch 6,
**dadurch gekennzeichnet,**
**dass** die Rastnut (23) und/oder die Rastansätze mehrere Raststufen (24,25) aufweist.

8. Montageelement nach einem der Ansprüche 1 bis 7,
**dadurch gekennzeichnet,**
**dass** die Einführstellung der Befestigungshülse (30) durch Anschlag der Scheibe (31) an dem Möbelteil begrenzt ist.

9. Montageelement nach einem der Ansprüche 1 bis 8,
**dadurch gekennzeichnet,**
**dass** die als Befestigungs- oder Gewindebohrung (21) ausgebildete Befestigungs- oder Gewindeaufnahme mit einer sich kontinuierlich erweiterten Einführungsöffnung (22) für den Verbindungszapfen (20) versehen ist.

10. Montageelement nach einem der Ansprüche 1 bis 9,
**dadurch gekennzeichnet,**
**dass** die Raststufen (24,25) des Verbindungszapfens (20) und die Rastflächen (37,38) der Rastansätze der Haltefedern (35) der Befestigungshülse (30) mit rauher Oberfläche versehen sind.

11. Montageelement nach einem der Ansprüche 1 bis 10,
**dadurch gekennzeichnet,**
**dass** der Verbindungszapfen (20) und die Befestigungshülse (30) oder der von der Befestigungshülse (30) getrennte Verbindungszapfen (20) einstückig an einem Möbelbeschlagteil angeformt sind.

12. Montageelement nach Anspruch 1,
**dadurch gekennzeichnet,**
**dass** die Anbindungen (26) am Übergang zum Verbindungszapfen (20) die Sollbruchstellen bilden und
**dass** beim Einschlagen des Verbindungszapfens (20) in die Aufnahme der Befestigungshülse (30) die Anbindungen (26) abbrechen und als Zentrierlappen für den Verbindungszapfen (20) in die Aufnahme der Befestigungshülse (30) einlenkbar sind.

13. Montageelement nach einem der Ansprüche 1 bis 12,
**dadurch gekennzeichnet,**
**dass** der Verbindungszapfen (20) als Verbindungsbolzen mit zwei Rastnuten zum Verbinden mit zwei Befestigungshülsen (30) ausgebildet ist.

14. Montageelement nach einem der Ansprüche 2 bis 13,
**dadurch gekennzeichnet,**
**dass** der Verbindungszapfen (20) der Aufnahme der Befestigungshülse (30) in einer vorbereiteten Einschlagstellung gehalten ist.

## Claims

1. Mounting element which is intended for furniture construction and can be inserted into a bore of a furniture component and secured therein, it being the case that the mounting element comprises a fastening sleeve (30) and a connecting pin (20), that the fastening sleeve (30) has deflectable retaining tongues (35), which enclose a mount for the connecting pin (20) and can be inserted into the bore of the furniture component, and that the connecting pin (20) has a fastening or threaded mount (21), **characterized in that** the retaining tongues (35) are provided with toothing arrangements (32) on their outer sides, and **in that** the connecting pin (20) is connected integrally to the fastening sleeve (30) via attachments (26), acting as predetermined breaking points, and is retained in a preparatory drive-in position.

2. Mounting element which is intended for furniture construction and can be inserted into a bore of a furniture component and secured therein, it being the case that the mounting element comprises a fastening sleeve (30) and a connecting pin (20), that the fastening sleeve (30) has deflectable retaining tongues (35), which enclose a mount for the connecting pin (20) and can be inserted into the bore of the furniture component, and that the connecting pin (20) has a fastening or threaded mount (21), **characterized in that** the retaining tongues (35) are provided with toothing arrangements (32) on their outer sides, and **in that** integrally formed in the region of the introduction side are lugs (39) which project into the mount of the fastening sleeve (30) and, when the connecting pin (20) is driven into the fastening sleeve (30), can be deflected into the mount and act as centring lugs for the connecting pin (20).

3. Mounting element according to Claim 1 or 2, **characterized in that** the retaining tongues (35) are connected to one another by means of an end disc (31).

4. Mounting element according to Claim 3, **characterized in that** the disc (31) has a slit (33), which preferably coincides with a slit (34) which subdivides the fastening sleeve (30) into retaining tongues (35).

5. Mounting element according to one of Claims 1 to 4, **characterized in that** the outer surfaces (27) of the connecting pin (20) and the inner surfaces (36) of the retaining tongues (35) are designed as smooth sliding surfaces.

6. Mounting element according to one of Claims 1 to 5, **characterized in that**, on the end side which is directed away from the disc (31), the fastening sleeve (30) with the retaining tongues (35) form latching extensions with latching surfaces (37, 38) which, in the driven-in position, latch into an encircling latching groove (23) of the connecting pin (20).

7. Mounting element according to Claim 6, **characterized in that** the latching groove (23) and/or the latching extensions have/has a plurality of latching steps (24, 25).

8. Mounting element according to one of Claims 1 to 7, **characterized in that** the introduction position of the fastening sleeve (30) is bounded by the disc (31) striking against the furniture component.

9. Mounting element according to one of Claims 1 to 8, **characterized in that** the fastening or threaded mount, which is designed as a fastening or threaded bore (21), is provided with a continuously widened introduction opening (22) for the connecting pin (20).

10. Mounting element according to one of Claims 1 to 9, **characterized in that** the latching steps (24, 25) of the connecting pin (20) and the latching surfaces (37, 38) of the latching extensions of the retaining tongues (35) of the fastening sleeve (30) are provided with a rough surface.

11. Mounting element according to one of Claims 1 to 10, **characterized in that** the connecting pin (20) and the fastening sleeve (30) or the connecting pin (20) separated from the fastening sleeve (30) are integrally formed on a furniture fitting component.

12. Mounting element according to Claim 1, **characterized in that** the attachments (26) at the transition to the connecting pin (20) form the predetermined breaking points, and **in that**, when the connecting pin (20) is driven into the mount of the fastening sleeve (30), the attachments (26) break and can be deflected into the mount of the fastening sleeve (30) as centring lugs for the connecting pin (20).

13. Mounting element according to one of Claims 1 to 12, **characterized in that** the connecting pin (20) is designed as a connecting bolt with two latching grooves for connection to two fastening sleeves (30).

14. Mounting element according to one of Claims 2 to 13, **characterized in that** the connecting pin (20) is retained in a preparatory drive-in position in the mount of the fastening sleeve (30).

## Revendications

1. Elément de montage pour la fabrication de meubles, lequel peut être inséré dans un perçage d'une partie de meuble et y être fixé, l'élément de montage comprenant une douille de fixation (30) et un tourillon de liaison (20), la douille de fixation (30) présentant des ressorts de fixation pouvant être déviés (35) qui entourent un logement pour le tourillon de liaison (20) et pouvant être enfoncée dans le perçage de la partie de meuble, et le tourillon de liaison (20) présentant un logement de fixation ou fileté (21), **caractérisé en ce que** les ressorts de fixation (35) sont pourvus sur leurs côtés extérieurs de dentures (32), et
**en ce que** le tourillon de liaison (20) est connecté d'une pièce par le biais d'attaches (26) servant de points destinés à la rupture à la douille de fixation (30) et est maintenu dans une position enfoncée préparée.

2. Elément de montage pour la fabrication de meubles, lequel peut être inséré dans un perçage d'une partie de meuble et y être fixé, l'élément de montage comprenant une douille de fixation (30) et un tourillon de liaison (20), la douille de fixation (30) présentant des ressorts de fixation pouvant être déviés (35) qui entourent un logement pour le tourillon de liaison (20) et pouvant être enfoncée dans le perçage de la partie de meuble, et le tourillon de liaison (20) présentant un logement de fixation ou fileté (21), **caractérisé en ce que** les ressorts de fixation (35) sont pourvus sur leurs côtés extérieurs de dentures (32), et **en ce que**, dans la région du côté d'insertion sont formées des pattes (39) saillant dans le logement de la douille de fixation (30), lesquelles, lors de l'enfoncement du tourillon de liaison (20) dans la douille de fixation (30) peuvent être déviées dans le logement et agissent en tant que pattes de centrage pour le tourillon de liaison (20).

3. Elément de montage selon la revendication 1 ou 2,
**caractérisé en ce que**
les ressorts de fixation (35) sont connectés les uns aux autres au moyen d'un disque du côté frontal (31).

4. Elément de montage selon la revendication 3,
**caractérisé en ce que**
le disque (31) présente une fente (33) qui coïncide de préférence avec une fente (34) divisant la douille de fixation (30) dans les ressorts de fixation (35).

5. Elément de montage selon l'une quelconque des revendications 1 à 4,
**caractérisé en ce que**
les surfaces extérieures (27) du tourillon de liaison (20) et les surfaces intérieures (36) des ressorts de fixation (35) sont réalisées sous forme de surfaces de glissement lisses.

6. Elément de montage selon l'une quelconque des revendications 1 à 5,
**caractérisé en ce que**
la douille de fixation (30) forme, sur le côté frontal opposé au disque (31), avec les ressorts de fixation (35), des saillies d'encliquetage avec des faces d'encliquetage (37, 38), qui s'encliquètent dans la position d'enfoncement dans une rainure d'encliquetage périphérique (23) du tourillon de liaison (20).

7. Elément de montage selon la revendication 6,
**caractérisé en ce que**
la rainure d'encliquetage (23) et/ou les saillies d'encliquetage présentent plusieurs échelons d'encliquetage (24, 25).

8. Elément de montage selon l'une quelconque des revendications 1 à 7,
**caractérisé en ce que**
la position d'insertion de la douille de fixation (30) est limitée par la butée du disque (31) contre la partie de meuble.

9. Elément de montage selon l'une quelconque des revendications 1 à 8,
**caractérisé en ce que**
le logement de fixation ou fileté réalisé en tant que perçage de fixation ou fileté (21) est pourvu d'une ouverture d'insertion (22) s'élargissant de manière continue pour le tourillon de liaison (20).

10. Elément de montage selon l'une quelconque des revendications 1 à 9,
**caractérisé en ce que**
les échelons d'encliquetage (24, 25) du tourillon de liaison (20) et les faces d'encliquetage (37, 38) des saillies d'encliquetage des ressorts de fixation (35) de la douille de fixation (30) sont pourvus d'une surface rugueuse.

11. Elément de montage selon l'une quelconque des revendications 1 à 10,
**caractérisé en ce que**
le tourillon de liaison (20) et la douille de fixation (30) ou le tourillon de liaison (20) séparé de la douille de fixation (30) sont formés d'une pièce sur une partie de ferrure de meuble.

12. Elément de montage selon la revendication 1,
**caractérisé en ce que**
les attaches (26) au niveau du passage au tourillon de liaison (20) forment les points destinés à la rupture et
**en ce que** lors de l'enfoncement du tourillon de liaison (20) dans le logement de la douille de fixation (30), les attaches (26) se cassent et peuvent être déviées, sous forme de pattes de centrage pour le tourillon de liaison (20), dans le logement de la douille de fixation (30).

13. Elément de montage selon l'une quelconque des revendications 1 à 12,
**caractérisé en ce que**
le tourillon de liaison (20) est réalisé en tant que boulon de liaison avec deux rainures d'encliquetage pour la connexion à deux douilles de fixation (30).

14. Elément de montage selon l'une quelconque des revendications 2 à 13,
**caractérisé en ce que**
le tourillon de liaison (20) du logement de la douille de fixation (30) est maintenu dans la position d'enfoncement préparée.
